# EUROPÄISCHE PATENTANMELDUNG

(11) **EP 2 983 237 A1**
(43) Veröffentlichungstag der Anmeldung: **10.02.2016**
(21) Anmeldenummer: 14179668.0
(22) Anmeldetag: 04.08.2014
(51) Int. Cl.: H01M 10/44, B65D 81/22, H01M 10/0525, H01M 10/54

(54) **Vorrichtung und Verfahren zum Deaktivieren und Aufbewahren von Batterien in einem deaktivierten Zustand und zur kontrollierten Abreaktion von defekten Batterien**

(71) Anmelder: TSR-KAT GmbH, 75056 Sulzfeld (DE)
(72) Erfinder: Pauling, Hans-Jürgen, Dr., 75038 Oberderdingen (DE)
(74) Vertreter: Schiffer, Axel Martin

(57) **Zusammenfassung**

Die vorliegende Erfindung betrifft eine Vorrichtung zum Deaktivieren und Aufbewahren von gebrauchten Batterien in einem deaktivierten Zustand und zur kontrollierten Abreaktion von defekten Batterien mit einem Aufnahmebehälter, der zur Aufnahme einer zu deaktivierenden Batterie eingerichtet ist und welcher eine elektrisch leitende Flüssigkeit enthält. Die elektrisch leitende Flüssigkeit ist in einer solchen Menge vorhanden und der Aufnahmebehälter ist derart gebildet, dass durch die elektrisch leitende Flüssigkeit eine elektrisch leitende Verbindung zwischen einem Pluspol und einem Minuspol der zu deaktivierenden Batterie herstellbar ist, wobei zusätzlich die elektrische Leitfähigkeit der Flüssigkeit so gewählt ist, dass eine zu deaktivierende Batterie ohne übermäßigen Wärmeeintrag in die elektrisch leitende Flüssigkeit und/oder den Aufnahmebehälter deaktivierbar ist. Ferner betrifft die Erfindung ein Verfahren zum Deaktivieren und Aufbewahren von Batterien in einem deaktivierten Zustand, wobei zunächst eine Vorrichtung mit einem Aufnahmebehälter, der zur Aufnahme einer zu deaktivierenden Batterie eingerichtet ist, bereitgestellt wird, nachfolgend eine elektrisch leitfähige Flüssigkeit in den Aufnahmebehälter eingefüllt wird und schließlich die Batterie in den Aufnahmebehälter zur Deaktivierung und Aufbewahrung eingebracht wird.

## Beschreibung

Die Erfindung betrifft eine Vorrichtung zum Deaktivieren und Aufbewahren von Batterien in einem deaktivierten Zustand und zur kontrollierten Abreaktion von defekten Batterien sowie ein Verfahren hierzu.

Im Rahmen der Energiewende, insbesondere durch die Einführung von Elektrofahrzeugen, kommen in steigendem Maße Hochenergiebatterien, wie beispielsweise Lithiumakkumulatoren, zum Einsatz.

Bei dem Recycling von Lithium-Ionen-Akkumulatoren, insbesondere von Hochenergielithiumbatterien aus der Elektrotraktion oder anderen Speicheraufgaben, welche Hochenergiebatterien einsetzen, besteht die Problematik, die Lithium-Akkumulatoren von der Entfallstelle oder dem Einsatzort zur Recyclings- beziehungsweise Entsorgungsstelle zu transportieren. Da sich die Lithiumbatterie in einem undefinierten Status befindet, ist deren Transport mit besonderen Risiken verbunden. Es besteht insbesondere die Gefahr von Personenschäden. Die gebrauchten Hochenergiebatterien können noch teilgeladen sein, so dass bei Berührung der stromführenden Teile oder der Kontakte durch Stromstöße gesundheitsgefährdende oder sogar tödliche Verletzungen auftreten können.

Ferner besteht eine Brand- und Explosionsgefahr. Lithium-Akkumulatoren enthalten nicht nur Lithium oder Lithiumverbindungen, sondern auch organische Verbindungen, wobei weiterhin das Gehäusematerial häufig aus Kunststoffen besteht. Bei einer Beschädigung der Hochenergiebatterie, was häufig bei gebrauchter Recyclingware nicht ausgeschlossen werden kann, sowie bei einer Beschädigung des Akkumulators, besteht eine große Brand- und Explosionsgefahr, da durch die Beschädigung von offenliegenden Lithium oder Lithiumverbindungen mit Sauerstoff oder Feuchtigkeit aus der umgebenden Atmosphäre diese Substanzen reagieren können und dabei Wasserstoff oder andere brennbare Gase entstehen. Zudem wird bei dieser Reaktion eine starke Wärmeentwicklung erzeugt. Eine weitere hohe Wärmeentwicklung entsteht bei der Beschädigung der Zellen oder Stacks, wie sie insbesondere bei Kurzschlüssen auftreten. Diese genannten Quellen der Wärmeentwicklung können die entstehenden brennbaren Gase entzünden oder die enthaltenen organischen Verbindungen oder auch die brennbaren Bestandteile, insbesondere Kunststoffe des Batteriegehäuses, entzünden. Auch ohne eine interne Wärmeentwicklung können die gebildeten brennbaren Gase, welche aus der Batterie entweichen, sich an externen Stellen wie beispielsweise in der Umgebung der Batterie, entzünden oder zur Explosion führen. Insbesondere in der Automobilindustrie besteht das Problem, dass beispielsweise nach einem Unfall die Zelle aufgebrochen ist und die Batterie mechanisch beschädigt oder sogar zerstört ist. In diesem Fall können bei Kontakt des aktiven Materials der Batterie mit einer Flüssigkeit, zum Beispiel dem Elektrolyten, hochenergetische unkontrollierte chemische Reaktionen unter Bildung eines hochexplosiven Luft/Wasserstoff-Gemisches auftreten.

Aus dem Stand der Technik ist derzeit keine technische Lösung bekannt, welche zum einen eine gefahrlose Deaktivierung von Hochenergiebatterien sowie deren gefahrlosen Transport gewährleistet, welche zu wirtschaftlich günstigen Konditionen möglich sind.

Gegenwärtig findet eine Deaktivierung von Lithiumbatterien nicht oder nur teilweise statt. Eine Voraussetzung für eine Deaktivierung ist die zumindest vollständige Entladung der Lithiumbatterie. Da jedoch keine Normung der entsprechenden Anschlüsse existiert, ist eine große Anzahl von Steckverbindungen notwendig, um jede beliebige Lithiumbatterie elektrisch entladen zu können. Ist jedoch die Lithiumbatterie defekt oder zumindest die Steuer- und Regelungselektronik nicht mehr voll funktionsfähig, ist eine Entladung über diese Anschlüsse grundsätzlich nicht mehr zu gewährleisten. Auch in den Fällen, in denen eine Entladung über die Anschlussklemmen gelingt, können sich die Batterien im Laufe der Zeit wieder regenerieren und erneut Spannung aufbauen. Dabei kann sich durch innere Prozesse die Batteriespannung innerhalb von Minuten bis Stunden wieder nahezu vollständig aufbauen. Da das Gefahrenpotenzial durch einen Stromstoß in diesen Fällen wieder vorliegt, ist ein anschließender Transport der Batterie nicht gefahrlos möglich.

Auch für den Transport von gebrauchten Lithiumbatterien ist aus dem Stand der Technik keine kosteneffiziente Lösung bekannt. Derzeit existieren nur Behälter aus Stahl oder Kunststoff, die einerseits über eine Wärmedämmung verfügen müssen, und andererseits ein integriertes Löschsystem aufweisen sollten.

Es existiert beispielsweise ein Transportbehälter mit einem eingebauten Löschsystem für beschädigte Lithiumbatterien mit einem Gefahrgutbehälter aus Stahl, welcher für den Transport und die Lagerung beschädigter Lithiumbatterien geeignet ist. Dabei wird mit einem speziellen Löschgel gelöscht, welches stark haftet, alle Oberflächen im Inneren des Behälters kühlt und gleichzeitig nicht mit den Lithiumverbindungen reagiert.

Ferner ist ein System für den gefahrlosen Transport und das Recycling von Lithium-Ionenbatterien bekannt, wobei spezielle Sicherheitsbehälter mit einem granularen Löschmittel zum Einsatz kommen. Für den Transport werden die Batterien in das Löschmittel gelegt, welches hauptsächlich aus Lithiumoxid besteht und Temperaturen bis 1050°C standhalten kann. Eine Flammenentwicklung kann somit nicht auftreten.

Für beide Systeme sind zusätzlich besondere Transportbehälter erforderlich. Diese speziellen Behälter mit einem integrierten Löschsystem sind sehr teuer, wodurch das Recycling der Batterien mit hohen Kosten verbunden ist. Insbesondere eine Deaktivierung der Batterien ist damit technisch nicht möglich und zudem versagt das Löschsystem bei einer hohen Wärmeentwicklung durch starke Batteriedefekte. Eine kombinierte Lösung aus einem Deaktivierungs- und einem Aufbewahrungssystem ist daher nicht bekannt.

Als eine **Aufgabe** der Erfindung kann angesehen werden, eine Vorrichtung zum Deaktivieren und Aufbewahren von Batterien in einem deaktivierten Zustand bereitzustellen, bei dem die Batterien in einen gefahrlosen entladenen oder abreagierten Zustand überführt werden, um anschließend sicherzustellen, dass die entladenen oder abreagierten Batterien in diesem gefahrlosen Zustand verbleiben. Diese Aufgabe wird durch eine Vorrichtung mit den Merkmalen des Anspruchs 1 gelöst.

Vorteilhafte Ausführungsvarianten der Vorrichtung sind Gegenstand der abhängigen Ansprüche und werden in der folgenden Beschreibung, insbesondere im Zusammenhang mit den Figuren, beschrieben.

Eine weitere Aufgabe der Erfindung kann darin gesehen werden, ein Verfahren zum Deaktivieren und Aufbewahren einer Batterie in einem deaktivierten Zustand bereitzustellen, welches besonders gefahrlos, einfach und kosteneffizient durchzuführen ist.

Diese Aufgabe wird durch ein Verfahren mit den Merkmalen des Anspruchs 11 gelöst.

Vorteilhafte Ausführungsvarianten des Verfahrens sind Gegenstand der abhängigen Ansprüche und werden in der folgenden Beschreibung, insbesondere im Zusammenhang mit den Figuren, beschrieben.

Die erfindungsgemäße Vorrichtung weist einen Aufnahmebehälter auf, der zur Aufnahme mindestens einer zu deaktivierenden Batterie eingerichtet ist und eine elektrisch leitende Flüssigkeit enthält. Die elektrisch leitende Flüssigkeit ist in einer solchen Menge vorhanden und der Aufnahmebehälter so gebildet, dass durch die elektrisch leitende Flüssigkeit eine elektrisch leitende Verbindung zwischen einem Pluspol und einem Minuspol der zu deaktivierenden Batterie herstellbar ist. Dabei ist eine elektrische Leitfähigkeit der Flüssigkeit so gewählt, dass die zu deaktivierende Batterie ohne übermäßigen Wärmeeintrag in die elektrisch leitende Flüssigkeit und/oder den Aufnahmebehälter deaktivierbar ist.

Als Kerngedanke der Erfindung kann angesehen werden, durch die leitfähige Flüssigkeit eine leitende Verbindung des Minus- und Pluspols der Batterie zu bewirken und diese dadurch in einem definierten Zeitraum vollständig zu entladen. Durch die Verwendung einer leitfähigen Flüssigkeit ist gewährleistet, dass sämtliche Arten von Kontaktstellen, unabhängig von der Anzahl oder Bauform der Batterie miteinander verbunden werden können. Dadurch wird die vollständige Entladung der Batterie sichergestellt, unabhängig von deren Bauart oder Form. Darüber hinaus wird die Batterie bei der erfindungsgemäßen Vorrichtung in diesem entladenen Zustand gehalten.

Ein Aufbau einer Spannung durch Regenerationseffekte im Inneren der Batterie wird damit ausgeschlossen, da durch die leitende Verbindung des Minus- und Pluspols der Batterie eine sich gegebenenfalls aufgebaute Regenerationsspannung rasch wieder abgebaut wird. Zudem sorgt die die Batterie vollständig umschließende Flüssigkeit dafür, dass eine unter Umständen auftretende Reaktionswärme schnell wieder abgeführt wird. Die Fähigkeit zur Abfuhr der freigewordenen Reaktionsenthalpie ist dabei im Wesentlichen abhängig von der Menge und der spezifischen Wärmekapazität der elektrisch leitenden Flüssigkeit.

Die maximale Temperatur innerhalb des Aufnahmebehälters, auf welche die Temperatur im Inneren ansteigen kann, wird lediglich durch die Siedetemperatur der leitenden Flüssigkeit begrenzt und kann immer derart gewählt werden, dass sie unterhalb der Flammtemperatur der Batteriebestandteile liegt, wodurch ein Brand ausgeschlossen wird. Im Falle eines Defektes der Batterie wird das offenliegende aktive Material oder deren Verbindungen mit der Flüssigkeit reagieren und die dabei entstehende Wärme abgeführt.

Darüber hinaus ist in der erfindungsgemäßen Vorrichtung ein sicherer Transport von gebrauchten, defekten oder gealterten Batterien möglich. Durch den definierten Abbau der Restspannung der Batterie und, im Fall von mechanischen Defekten, durch kontrollierte Abreaktion des aktiven Materials werden die Umwelt und mit der Batterie in Kontakt kommende Personen nicht mit Schadstoffen belastet oder der Gefahr von Stromschlägen ausgesetzt. Insbesondere wird der bei einer Reaktion des Elektrolyten mit dem aktiven Material gebildete hochexplosive Wasserstoff definiert abgeführt und stellt kein Gefährdungspotential mehr dar.

Bevorzugt ist die leitfähige Flüssigkeit eine wässrige Salzlösung. Eine wässrige Salzlösung ist einfach und kosteneffizient herzustellen, und weist eine hohe Wärmekapazität zur Aufnahme der entstehenden Reaktionswärme auf. Durch Variation der Salzkonzentration kann die Leitfähigkeit der Flüssigkeit an die gegebenen Bedingungen angepasst werden. Als Salze können alle gängigen anorganischen Elektrolyte, insbesondere Kochsalz, verwendet werden. Daneben kann als leitfähige Flüssigkeit auch eine ionische Flüssigkeit, das heißt ein organisches Salz, deren Ionen durch Ladungsdelokalisierung und sterische Effekte die Bildung eines stabilen Kristallgitters behindern, verwendet werden. Beispiele für verwendete Kationen, die insbesondere alkyliert sein können sind:
Imidazolium, Pyridinium, Pyrrolidinium, Guanidinium, Uronium, Thiouronium, Piperidinium, Morpholonium, Ammonium und Phosphonium. Als Anionen können Hallogenide und komplexere Ionen wie Tetrafluoroborate, Trifluoracetate, Triflate, Hexafluorophosphate, Phosphinate und Tosylate eingesetzt werden. Ferner können organische Ionen, wie beispielweise Imide und Amide, Anionen sein.

Durch Variation der Substituenten eines gegebenen Kations und durch Variation des Anions können die physikalisch-chemischen Eigenschaften der ionischen Flüssigkeit in weiten Grenzen variiert und auf die spezifischen Anforderungen hin angepasst werden. Insbesondere der Schmelzpunkt der ionischen Flüssigkeit lässt sich somit geeignet einstellen. Auch die Viskosität der elektrisch leitenden Flüssigkeit kann auf diese Weise definiert an die vorliegenden Bedingungen, zum Beispiel die Temperatur, angepasst sein. Ionische Flüssigkeiten sind thermisch relativ stabil, schwer entzündlich, weisen einen sehr niedrigen Dampfdruck auf und zeigen eine hohe elektrochemische Stabilität gegen Oxidationen und Reduktionen. Es ist vorteilhaft, wenn der Behälter eine Befestigungseinrichtung zum Fixieren der Batterie in dem Behälter aufweist.

Auf diese Weise wird vermieden, dass sich die Batterie unkontrolliert in dem Behälter bewegt und an der Gehäusewandung anschlägt, wodurch der Transport der Batterie insbesondere unter sicherheitstechnischen Gesichtspunkten erschwert wird. Darüber hinaus wird bei einer Fixierung der Batterie innerhalb des Aufnahmebehälters sichergestellt, dass die negative und positive Elektrode, das heißt der Minus- und der Pluspol der Batterie, jederzeit über die leitfähige Flüssigkeit miteinander verbunden sind und sich insbesondere in Ruhephasen durch Regenerationseffekte nicht erneut Spannungen in der Batterie aufbauen können.

Ferner wird durch die fixierte Position ein konstanter Abstand der Batteriewände zur Gehäusewandung des Aufnahmebehälters sichergestellt, um auftretende Wärmeentwicklungen an jedem Ort durch die Flüssigkeit aufnehmen und ableiten zu können. Die Befestigungseinrichtung kann auf verschiedene Arten realisiert sein, wie beispielsweise durch Klammern, Rastverbindungen, Steckverbindungen, Bügel, Dübel, Magnete oder Ähnliches.

In einer besonders bevorzugten Ausführungsform der erfindungsgemäßen Vorrichtung weist der Behälter in einem abgeschlossenen Zustand eine Ventilationseinrichtung auf.

Wenn der Behälter mit einem Deckel abgeschlossen wird, kann die Ventilationsvorrichtung in diesem angeordnet sein. Durch diese Ventilation wird die Konzentration des entstehenden brennbaren Gases, zum Beispiel Wasserstoff, in einem Bereich gehalten, da das Gas-Luft-Gemisch weder brennbar noch explosiv ist. Zudem wird durch die Luftzufuhr und -abfuhr eine zusätzliche Kühlung erzeugt, die den Wärmeabtransport weiter fördert. Die Ventilationseinrichtung kann auch in einer mehrfachen Ausführung an verschiedenen Stellen des Aufnahmebehälters vorgesehen sein, um eine noch gleichmäßigere Ableitung von unerwünschten Gasen und Wärmeenergie sicherzustellen.

Es ist zweckmäßig, wenn der Aufnahmebehälter aus einem nichtleitenden Material, insbesondere Kunststoff, gefertigt ist.

Als Kunststoffe eignen sich insbesondere Polyethylene, Polypropylene, Polyvinylchlorid oder Polyester. Diese sind besonders preiswert sowie temperatur- und formstabil und auch chemisch relativ widerstandsfähig. Durch den Isolationscharakter dieses Materials werden mit der Verwendung des Aufnahmebehälters befasste Personen nicht der Gefahr durch die elektrische Restspannung oder -ladung der Batterie ausgesetzt. Auch die vorgenannte Befestigungseinrichtung kann integral aus an dem Aufnahmebehälter sich bildende Material gefertigt sein. Möglich ist auch eine Ausführung mit unterschiedlichen miteinander kombinierten Kunststoffarten zu verwenden, um die unterschiedlichen Anforderungen im Außen- und Innenbereich des Behälters zu berücksichtigen.

Es ist weiter vorteilhaft, wenn der Aufnahmebehälter eine Kühleinrichtung zum Kühlen der elektrisch leitenden Flüssigkeit aufweist.

Auf diese Weise kann unabhängig von der Wärmekapazität der elektrisch leitenden Flüssigkeit zusätzlich entstehende Reaktionswärme abgeführt werden. Als Kühleinrichtungen können mechanische, elektrische oder chemische Kühlsysteme eingesetzt werden, welche innerhalb oder außerhalb des Aufnahmebehälters angeordnet sein können. Bei Verwendung einer elektrischen Kühleinrichtung, wie zum Beispiel einem Peltier-Element, kann insbesondere die Restladung, welche noch in der Batterie vorhanden ist, zu deren Energieversorgung verwendet werden. Um eine gleichmäßige Temperaturverteilung innerhalb der Flüssigkeit zu gewährleisten, kann zudem eine Mischeinrichtung zum Bewirken einer erzwungenen Konvektion innerhalb der Flüssigkeit vorgesehen sein.

Es ist zweckmäßig, wenn der Behälter eine Leitfähigkeitsmesseinrichtung zum Messen der Leitfähigkeit der Flüssigkeit aufweist.

Mit dieser Einrichtung kann ermittelt werden, ob die für die vorliegende Batterieart noch vorhandene Restladung-/Spannung geeignete Leitfähigkeit der Flüssigkeit vorliegt. Zudem kann bei einer Veränderung der Leitfähigkeit durch elektrochemische Prozesse eine Anpassung, beispielsweise durch Zugabe von Elektrolytsalz, vorgenommen werden. Ein Leitfähigkeitssensor kann aus einem aus zwei mit Platinmohr belegten sich gegenüberliegenden Platinelektroden bestehen, wobei die Elektroden eine definierte Fläche aufweisen und in einem definierten Abstand zueinander stehen. Die Messeinrichtung kann in der Höhe bezüglich des Flüssigkeitsspiegels ausgebildet sein, um unterschiedliche Befüllungsgrade des Aufnahmebehälters berücksichtigen zu können.

Zudem kann der Aufnahmebehälter eine Spannungsmesseinrichtung zum Messen der Restspannung der Batterie aufweisen. Hiermit kann verfolgt werden, ob der Entladungsprozess einen ordnungsgemäßen Verlauf nimmt und bei auftretenden Problemen können entsprechende Gegenmaßnahmen ergriffen werden. Insbesondere kann zu Beginn des Entladungsprozesses die Anfangsrestspannung der Batterie ermittelt und eine optimale Leitfähigkeit der Flüssigkeit, beispielsweise durch Variation der Elektrolytkonzentration, eingestellt werden. Auch kann damit vor der Entnahme der Batterie aus dem Aufnahmebehälter zu einer weiteren Verwendung, wie einem Recyclingverfahren, sichergestellt werden, dass keine Gefährdung durch die elektrische Restladung vorliegt. Als Spannungsmesseinrichtung eignen sich sowohl digitale als auch analoge Messgeräte, wie elektrostatische Dreheisen- und Drehspulenmesswerke. Auch Messumformer sowie Kompensatoren können zum Einsatz kommen.

Es ist weiter vorteilhaft, wenn eine Druckmesseinrichtung zum Messen eines Druckes innerhalb des Aufnahmebehälters vorhanden ist.

Bei einer Reaktion des aktiven Materials der Batterie, insbesondere von Lithium und Lithiumverbindungen, mit der elektrisch leitenden Flüssigkeit, insbesondere einer wässrigen Salzlösung, können brennbare Gase, wie beispielsweise Wasserstoff, gebildet werden. Dieses Gas kann beim Austritt mit dem in der Atmosphäre enthaltenen Sauerstoff ein gefährliches brennbares Gemisch bilden. Durch diese Druckmesseinrichtung kann ein entsprechendes Gefährdungspotenzial vermieden beziehungsweise der Aufbau desselbigen verfolgt und durch kontrolliertes Öffnen des Aufnahmebehälters oder Aktivieren der Ventilationseinrichtung der Druck innerhalb des Aufnahmebehälters kontrolliert und definiert verringert werden. Zudem lässt der Verlauf der Druckänderung einen Schluss darauf zu, ob die Batterie Defekte der Ummantelung aufweist, so dass die elektrisch leitende Flüssigkeit unmittelbar mit dem aktiven Material in Kontakt treten kann.

Es ist weiter bevorzugt, wenn eine Temperaturmesseinrichtung zum Messen einer Temperatur der Flüssigkeit vorhanden ist.

Auf diese Weise kann festgestellt werden, dass die Deaktivierung und Entladung der Batterie kontrolliert und definiert und ohne einen übermäßigen Wärmeeintrag in die elektrisch leitende Flüssigkeit verläuft. Sollte die Temperatur der Flüssigkeit über einen kritischen Wert ansteigen, an dem beispielsweise gefährliche Nebenreaktionen einsetzen könnten, oder die elektrisch leitende Flüssigkeit verdampft, so ist es möglich, durch Aktivieren der genannten Kühleinrichtung dieser bedrohlichen Entwicklung entgegenzuwirken. Darüber hinaus erlaubt auch die Temperaturmesseinrichtung ein Verfolgen des definierten und kontrollierten Ablaufs der Deaktivierung und Entladung der Batterie, da die Temperatur der elektrisch leitenden Flüssigkeit eine definierte Funktion des Wärmeeintrags durch die Entladung sowie der Wärmeabfuhr durch Wärmeleitprozesse und der Menge und spezifischen Wärmekapazität der elektrisch leitenden Flüssigkeit ist.

Als Druckmesseinrichtung eignen sich insbesondere Drucksensoren, welche die physikalische Größe "Druck" in eine zum Druck proportionale elektrische Ausgangsgröße umwandeln, wie beispielsweise piezoelektrische Sensoren. Als Temperaturmesseinrichtung eignen sich insbesondere elektronische Thermometer mit Halbleitertemperatursensor, wie zum Beispiel Kaltleiterwiderstände oder Sensorschaltkreise sowie Widerstandsthermometer mit Platin 100 oder Silizium sowie Thermometer mit Thermoelementen wie Nickel-Chrom/Nickel, Platin-Rhodium oder Eisen/Konstantan.

Es ist weiter zweckmäßig, wenn eine Regeleinrichtung zum Einstellen der elektrischen Leitfähigkeit der Flüssigkeit vorhanden ist.

Auf diese Weise wird sichergestellt, dass bei dem Deaktivierungs- und Entladungsprozess der zu deaktivierenden Batterie dieser Vorgang ohne einen übermäßigen Wärmeeintrag in die elektrisch leitende Flüssigkeit und/oder den Aufnahmebehälter erfolgt. Bei einer zu hohen elektrischen Leitfähigkeit der Flüssigkeit erfolgt der Entladungsprozess zu rasch und der Wärmeenergieeintrag in die Flüssigkeit erfolgt in so kurzer Zeit, dass eine ausreichende Wärmeabfuhr nicht mehr gewährleistet werden kann, so dass eine starke Erhitzung der Flüssigkeit die Folge sein kann.

Insbesondere bei einem Verdampfen der Flüssigkeit sowie einsetzenden gefährlichen Reaktionen, insbesondere mit der Entwicklung von Brenngasen durch den Entladungsprozess wird dadurch ein hohes Gefahrenpotenzial aufgebaut. Ist andererseits die elektrische Leitfähigkeit der Flüssigkeit so gering, so verläuft der Deaktivierungsvorgang zu langsam und nicht mehr in einem wirtschaftlich zu vertretenden Zeitraum. Die Regeleinrichtung ist bevorzugt mit einem Vorratsbehälter für einen Elektrolyten verbunden, welche bei einer zu geringen elektrischen Leitfähigkeit zusätzlichen Elektrolyten in die Flüssigkeit einspeist. Zusätzlich kann die Regeleinrichtung mit einem Reservoir für die elektrisch leitende Flüssigkeit verbunden sein, so dass bei einer zu hohen Leitfähigkeit durch die Zugabe von weiterer Flüssigkeit der Leitfähigkeitswert abgesenkt werden kann.

Die Einregelung der elektrischen Leitfähigkeit kann entweder vor dem Einbringen der Batterie in den Aufnahmebehälter erfolgen, was insbesondere dann vorteilhaft ist, wenn die elektrische Leitfähigkeit der Flüssigkeit zu hoch ist, da hierbei eine erhebliche Menge an weiterer Flüssigkeit zugeführt werden müsste, um den Leitfähigkeitswert signifikant abzusenken. Aufgrund der sehr begrenzten Menge an potenziell zuführbaren Elektrolyten bei einer zu geringen Leitfähigkeit kann der Regelungsprozess auch während des Deaktivierungsverfahrens fortgesetzt werden, da der hierfür nötige Behälter für den Elektrolyten keinen großen Platzbedarf beansprucht.

Gegenstand der Erfindung ist auch ein Verfahren zum Deaktivieren und Aufbewahren von Batterien in einem deaktivierten Zustand.

Das erfindungsgemäße Verfahren sieht vor, eine Vorrichtung mit einem Aufnahmebehälter bereitzustellen, der zur Aufnahme mindestens einer zu deaktivierenden Batterie eingerichtet ist. In den Aufnahmebehälter wird eine elektrisch leitfähige Flüssigkeit in einer Menge eingefüllt, so dass durch die elektrisch leitende Flüssigkeit eine elektrisch leitende Verbindung zwischen einem Pluspol und einem Minuspol der zu deaktivierenden Batterie hergestellt wird. Folgend wird eine Batterie im Aufnahmebehälter zur Deaktivierung und Aufbewahrung der Batterie eingebracht.

Durch die leitfähige Flüssigkeit wird eine leitende Verbindung zwischen dem Minus- und Pluspol der Batterie erzeugt und diese über einen definierten Zeitraum vollständig entladen. Dabei ist gewährleistet, dass sämtliche Arten von unterschiedlichen Kontaktformen sowie deren Anzahl miteinander verbunden werden können und die vollständige Entladung der Batterie unabhängig von der Bauart oder Form der Batterie sichergestellt wird. Nach dem Abschluss des Entladungsprozesses wird über die leitende Verbindung der entladene Zustand der Batterie aufrechterhalten und insbesondere ein erneuter Aufbau einer Spannung durch Regenerationseffekte ausgeschlossen.

In einer bevorzugten Ausführungsform des erfindungsgemäßen Verfahrens wird eine Restladung und/oder -spannung der Batterie vor dem Einbringen in den Aufnahmebehälter gemessen und eine elektrische Leitfähigkeit der Flüssigkeit in Abhängigkeit der gemessenen Restladung eingestellt, so dass die Batterie ohne übermäßigen Wärmeeintrag in die elektrisch leitende Flüssigkeit und/oder den Aufnahmebehälter deaktiviert wird.

Die die Batterie umgebende Flüssigkeit bewirkt, dass eine auftretende Reaktionswärme unmittelbar wieder abgeleitet wird. Somit wird die Höchsttemperatur innerhalb des Aufnahmebehälters, auf welche die Temperatur ansteigen kann, lediglich durch die Siedetemperatur der Flüssigkeit begrenzt und kann so gewählt werden, dass sie unterhalb der Flammtemperatur der Batteriebestandteile liegt, wodurch ein Brand ausgeschlossen wird. Selbst im Falle eines Defektes der Batterie wird das offen zugängliche aktive Material, welches mit der umgebenen Flüssigkeit reagieren könnte und dabei eine Wärmeenergie erzeugt, abgeführt. Das Maß des Wärmeeintrags kann über das Einstellen der elektrischen Leitfähigkeit der Flüssigkeit so eingestellt werden, dass die Wärmeabfuhr mit dem Wärmeeintrag im Gleichgewicht ist und keine übermäßige Erhitzung des Aufnahmebehälters auftreten kann.

Zweckmäßigerweise ist die Batterie eine Batterie auf Lithiumbasis.

Lithiumbatterien weisen eine höhere Energiedichte, eine höhere spezifische Energie sowie eine höhere Zellspannung, eine sehr lange Lagerfähigkeit durch eine geringe Selbstentladung sowie einen breiten Temperaturverwendungsbereich und vielfältigere Einsatzmöglichkeiten im Vergleich zu anderen Primärzellen mit wässrigen Elektrolyten auf.

In der Lithiumbatterie kann das Lithium üblicherweise in folgenden Verbindungen vorliegen:
Als Material für die negative Elektrode in Form von Graphit mit interkaliertem elementaren Lithium, als nanokristallines amorphes Lithium mit interkaliertem elementaren Lithium, als Lithium-Titanat Li₄Te₅O₁₂ oder als Zinndioxid SnO₂.

In der positiven Elektrode als LiCoO₂, LiNi₂, LiNi₁₋ₓCoₓ O₂, LiNi_{0,85}Co_{0,1}Al_{0,05}O₂, LiNi_{0,33}Co_{0,33}Mn_{0,33}O₂, LiMn₂O₄, LiMnO₂, LiFePO₄ oder Li₂FePO₄F.

Sowohl in den Elektroden wie in den Elektrolyten können die Verbindungen LiSOCl₂, LiSO₂, Li(CF)ₙ, Lil₂, LiFeS₂, LiO₂, LiPF₆ oder Li₃PO₄ verwendet werden.

Besonders zweckmäßig ist das Verfahren, wenn die Batterie defekt ist.

Bei den Defekten kann es sich um mechanische Beschädigungen oder um Alterungserscheinungen handeln. Durch das erfindungsgemäße Verfahren wird eine definierte und kontrollierte Abreaktion insbesondere von defekten und gealterten Batterien erreicht, ohne dass ein Gefährdungspotential für die Umgebung auftritt. Dabei reagiert der flüssige Elektrolyt mit dem aktiven Material der Batterie, das heißt insbesondere Lithium und dessen Verbindungen reagieren in einem definierten Zeitrahmen kontrolliert ab.

In einer weiteren bevorzugten Ausführungsform des erfindungsgemäßen Verfahrens wird die Batterie in den Aufnahmebehälter zu einem Zielort transportiert.

Durch die vollständige Entladung der Batterie sowie der Sicherstellung, dass durch Regenerationseffekte keine weitere Aufladung der Batterie stattfinden kann, ist der sichere Transport der Batterie in dem Aufnahmebehälter gewährleistet. Die Batterie kann somit ohne Gefahrrisiko zu beliebigen Orten, beispielsweise zur Weiterverarbeitung, Entsorgung und Recycling transportiert werden.

Besonders bevorzugt ist es, wenn das erfindungsgemäße Verfahren mit einer Vorrichtung nach einem der Ansprüche 1 bis 10 durchgeführt wird.

Die Merkmale der erfindungsgemäßen Vorrichtung erlauben eine besonders einfache, effiziente und sichere Durchführung des erfindungsgemäßen Verfahrens. Weitere Eigenschaften und Vorteile der erfindungsgemäßen Vorrichtung zum Deaktivieren und Aufbewahren von Batterien in einem deaktivierten Zustand werden nachstehend unter Bezugnahme auf die beigefügten schematischen Figuren beschrieben. Darin zeigt:
- Fig. 1: eine Querschnittsansicht der erfindungsgemäßen Vorrichtung;
- Fig. 2: eine Aufsicht auf die erfindungsgemäße Vorrichtung.

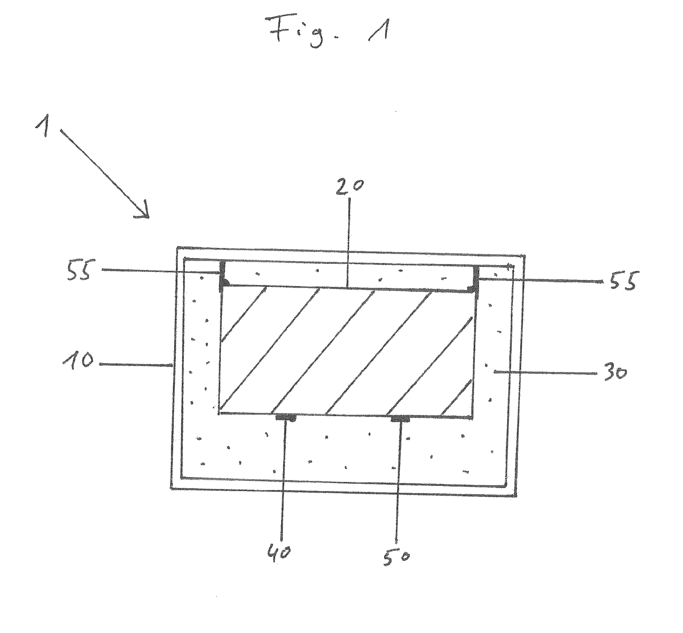

Ein Beispiel einer erfindungsgemäßen Vorrichtung 1 ist in Fig. 1 im Querschnitt dargestellt.

Die Batterie 20 ist mittels Befestigungsmitteln 55 an einer Wand des Aufnahmebehälters 10 befestigt. Die Batterie 20 weist einen Pluspol 40 sowie einen Minuspol 50 auf, welche über die elektrisch leitende Flüssigkeit 30, die in den Aufnahmebehälter 10 eingefüllt ist, leitend miteinander verbunden sind.

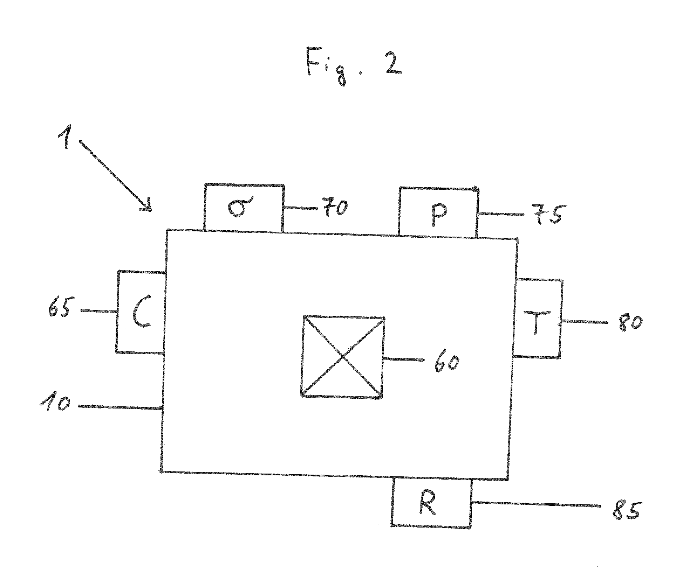

Eine Aufsicht auf eine Ausführungsform der erfindungsgemäßen Vorrichtung 1 ist in Fig. 2 dargestellt.

An der Oberseite des Aufnahmebehälters 10 ist eine Ventilationseinrichtung 60 vorgesehen, welche den Innenraum des Aufnahmebehälters 10 belüftet und für einen definierten Wärmeaustrag in die Umgebung sowie einen Gasaustausch mit der Atmosphäre sorgt.

Ferner sind an der Außenseite des Aufnahmebehälters 10 eine Kühleinrichtung 65 zum Kühlen der in dem Aufnahmebehälter 10 enthaltenen elektrisch leitenden Flüssigkeit 30, eine Leitfähigkeitsmesseinrichtung 70 zum Messen der elektrischen Leitfähigkeit der Flüssigkeit 30, eine Druckmesseinrichtung 75 zum Messen eines Druckes innerhalb des Aufnahmebehälters 10 sowie eine Temperaturmesseinrichtung 80 zum Messen der Temperatur der elektrisch leitenden Flüssigkeit 30 oder der sich darüber befindlichen Gasatmosphäre vorgesehen. Eine an dem Aufnahmebehälter 10 angebrachte Regeleinrichtung 85, welche mit der elektrischen Leitfähigkeitsmesseinrichtung 70 verbunden ist, dient zum Einstellen der elektrischen Leitfähigkeit der Flüssigkeit 30. Diese kann durch Zugabe von Elektrolytsalz erhöht beziehungsweise durch Zuführen der leitenden Flüssigkeit 30 erniedrigt werden. Die Flüssigkeit 30 dient ferner zur Aufnahme von Wärmeenergie, die durch elektrochemische oder andere Prozesse, insbesondere Reaktionen der Flüssigkeit 30 mit aktivem Material der Batterie 20, erzeugt wird.

## Patentansprüche

1. Vorrichtung (1) zum Deaktivieren und Aufbewahren von Batterien (20) in einem deaktivierten Zustand und zur kontrollierten Abreaktion von defekten Batterien,
mit einem Aufnahmebehälter (10), der zur Aufnahme mindestens einer zu deaktivierenden Batterie (20) eingerichtet ist,
**dadurch gekennzeichnet,**
**dass** der Aufnahmebehälter (10) eine elektrisch leitende Flüssigkeit (30) enthält,
**dass** die elektrisch leitende Flüssigkeit (30) in einer solchen Menge vorhanden und der Aufnahmebehälter (10) so gebildet ist, dass durch die elektrische leitende Flüssigkeit (30) eine elektrisch leitende Verbindung zwischen einem Pluspol (40) und einem Minuspol (50) der zu deaktivierenden Batterie (20) herstellbar ist,
**dass** eine elektrische Leitfähigkeit der Flüssigkeit (30) so gewählt ist, dass eine zu deaktivierende Batterie (20) ohne übermäßigen Wärmeeintrag in die elektrisch leitende Flüssigkeit und/oder den Aufnahmebehälter (10) deaktivierbar ist.

2. Vorrichtung nach Anspruch 1,
**dadurch gekennzeichnet,**
**dass** die elektrisch leitfähige Flüssigkeit (30) eine wässrige Salzlösung ist.

3. Vorrichtung nach einem der Ansprüche 1 oder 2,
**dadurch gekennzeichnet,**
**dass** eine Befestigungseinrichtung (55) zum Fixieren der Batterie (20) in dem Aufnahmebehälter (10) vorhanden ist.

4. Vorrichtung nach einem der Ansprüche 1 bis 3,
**dadurch gekennzeichnet,**
**dass** der Aufnahmebehälter (10) eine Ventilationseinrichtung (60) zum Belüften eines Innenraumes des Aufnahmebehälters (10) aufweist.

5. Vorrichtung nach einem der Ansprüche 1 bis 4,
**dadurch gekennzeichnet,**
**dass** der Aufnahmebehälter (10) aus einem nichtleitenden Material, insbesondere Kunststoff, gefertigt ist.

6. Vorrichtung nach einem der Ansprüche 1 bis 5,
**dadurch gekennzeichnet,**
**dass** eine Kühleinrichtung (65) zum Kühlen der elektrisch leitenden Flüssigkeit (30) vorhanden ist.

7. Vorrichtung nach einem der Ansprüche 1 bis 6,
**dadurch gekennzeichnet,**
**dass** eine Leitfähigkeitsmesseinrichtung (70) zum Messen einer elektrischen Leitfähigkeit der Flüssigkeit (30) vorhanden ist.

8. Vorrichtung nach einem der Ansprüche 1 bis 7,
**dadurch gekennzeichnet,**
**dass** eine Druckmesseinrichtung (75) zum Messen eines Drucks innerhalb des Aufnahmebehälters (10) vorhanden ist.

9. Vorrichtung nach einem der Ansprüche 1 bis 8,
**dadurch gekennzeichnet,**
**dass** eine Temperaturmesseinrichtung (80) zum Messen einer Temperatur der elektrisch leitenden Flüssigkeit (30) vorhanden ist.

10. Vorrichtung nach einem der Ansprüche 1 bis 9,
**dadurch gekennzeichnet,**
**dass** eine Regeleinrichtung (85) zum Einstellen der elektrischen Leitfähigkeit der Flüssigkeit (30) vorhanden ist.

11. Verfahren zum Deaktivieren und Aufbewahren von Batterien (20) in einem deaktivierten Zustand mit den Schritten:
- Bereitstellen einer Vorrichtung (1) mit einem Aufnahmebehälter (10), der zur Aufnahme mindestens einer zu deaktivierenden Batterie (20) eingerichtet ist;
- Einfüllen einer elektrisch leitfähigen Flüssigkeit (30) in den Aufnahmebehälter (10), so dass durch die elektrisch leitende Flüssigkeit (30) eine elektrisch leitende Verbindung zwischen einem Pluspol (40) und einem Minuspol (50) der zu deaktivierenden Batterie (20) hergestellt wird;
- Einbringen der Batterie (20) in den Aufnahmebehälter (10) zur Deaktivierung und Aufbewahrung der Batterie (20).

12. Verfahren nach Anspruch 11,
**dadurch gekennzeichnet,**
**dass** eine Restladung und/oder -spannung der Batterie (20) vor dem Einbringen in den Aufnahmebehälter (10) gemessen und eine elektrische Leitfähigkeit der Flüssigkeit (30) in Abhängigkeit der gemessenen Restladung eingestellt wird, so dass die Batterie (20) ohne übermäßigen Wärmeeintrag in die elektrisch leitende Flüssigkeit (30) und/oder den Aufnahmebehälter (10) deaktiviert wird.

13. Verfahren nach Anspruch 11 oder 12,
**dadurch gekennzeichnet,**
**dass** die Batterie (20) eine Batterie auf Lithiumbasis ist.

14. Verfahren nach einem der Ansprüche 11 bis 13,
**dadurch gekennzeichnet,**
**dass** die Batterie (20) defekt ist.

15. Verfahren nach einem der Ansprüche 11 bis 14,
**dadurch gekennzeichnet,**
**dass** die Batterie (20) in dem Aufnahmebehälter (10) zu einem Zielort transportiert wird.

16. Verfahren nach einem der Ansprüche 11 bis 15,
**dadurch gekennzeichnet,**
**dass** eine Vorrichtung (1) nach einem der Ansprüche 1 bis 10 verwendet wird.
